# EUROPÄISCHE PATENTANMELDUNG

(11) **EP 0 709 182 A2**
(43) Veröffentlichungstag der Anmeldung: **01.05.1996**
(21) Anmeldenummer: 95114182.9
(22) Anmeldetag: 09.09.1995
(51) Int. Cl.: B32B 5/10, B32B 5/26

(54) **Schutzschicht, insbesondere Vandalismus-Schutzschicht**

(30) Priorität: 25.10.1994 DE 4438013
(71) Anmelder: Gebr. Happich GmbH, D-42097 Wuppertal (DE)
(72) Erfinder: Nockemann, Hans, D-42111 Wuppertal (DE); Schwarz, Bruno, Dr., D-64646 Oberlaudenbach (DE)

(57) **Zusammenfassung**

Schutzschicht, insbesondere Vandalismus-Schutzschicht für Fahrzeugsitze, Fahrzeugdächer, Cabrioverdecke, Fahrzeugplanen, Zelte, Traglufthallen, Wandverkleidungen, Splitterschutzwände, schußsichere Westen aus einer Maschenware aus schnittfesten Fasern wie aromatischen Polyamidfasern, nach dem Gelspinnverfahren ersponnenen Polyethylenfasern oder Glasfasern, einem Draht in mindestens einem Fadensystem der Maschenware und einer wenigstens einseitig auf die Schutzschicht aufgebrachten textilen Vliesschicht.

## Beschreibung

Die Erfindung betrifft eine Schutzschicht, insbesondere eine Vandalismus-Schutzschicht für Fahrzeugsitze, Fahrzeugdächer, Cabrioverdecke, Fahrzeugplanen, Zelte, Traglufthallen, Wandverkleidungen, sowie für Splitterschutzwände und schußsichere Westen.

Besonders in öffentlichen Verkehrsmitteln wie Bahnen, Omnibussen etc. nimmt der Vandalismus in Form von Beschädigungen der Sitzbezüge, besonders durch Zerschneiden der Bezüge, mehr und mehr zu. Aus diesem Grund sind die Betreiber öffentlicher Verkehrsmittel gezwungen, bei der Ausstattung neuer Wagen sowie beim Auswechseln beschädigter Sitze Maßnahmen zu ergreifen, die diesem Vandalismus entgegenwirken. Deshalb hat das Interesse an schnittfesten Sitzbezügen in neuerer Zeit sehr stark zugenommen.

Doch nicht nur Fahrzeugsitze sind vandalismusgefährdet. In gleicher Weise wird ein zunehmender Vandalismus, häufig gepaart mit Diebstahlabsichten, auch bei Faltschiebedächern und Cabrioverdecken von Fahrzeugen, bei Abdeckplanen für Lastkraftwagen oder andere Gütertransportfahrzeuge sowie bei Zelten, bei Traglufthallen und anderen Gebilden aus dem Bereich des textilen Bauens sowie bei Wandauskleidungen, zum Beispiel Prallwänden in Sportstätten oder öffentlichen Verkehrsmitteln, beobachtet.

Zur Verhinderung oder mindestens zur Erschwerung des Vandalismus wurden für Fahrzeugsitze bereits mehrere verschiedene Problemlösungen vorgeschlagen.

So wird in DE-A 3 702 639 angeregt, ein feinmaschiges Metallgewebe zwischen dem Sitzbezug-Oberstoff und dem den Sitzkörper bildendem Schaumstoff anzubringen. Eine ähnliche Problemlösung wird in GB-A 2 204 235 vorgeschlagen.

Gestricke aus Draht oder aus Metallfasern werden in DE-U 90 04 625 und EP-A 190 064 beschrieben.

Flächengebilde aus Metalldrähten oder Metallfasern haben als Vandalismus-Schutzschicht jedoch vor allem bei Fahrzeugsitzen erhebliche Nachteile, die sich sowohl bei der Verarbeitung als auch besonders im Gebrauch äußern. Diese Vandalismus-Schutzschichten sind üblicherweise unter dem eigentlichen Sitzbezug angeordnet, da sie nur an dieser Stelle, ohne dem Benutzer und dem Schädiger aufzufallen, ihre Schutzwirkung entfalten können.

Solche Flächengebilde aus Metalldrähten und Metallfasern sind wegen ihrer geringen Flexibilität verhältnismäßig schlecht verarbeitbar, da vor allem beim Überbrücken nicht ebener Flächen, was bei der Herstellung von Fahrzeugsitzen in einem hohen Maß erforderlich ist, zusätzliche Schneid- bzw. Einschneidvorgänge, die sich negativ auf die Produktionskosten auswirken, erforderlich sind.

Die Nachteile von Vandalismus-Schutzschichten aus Metalldrähten oder Metallfasern zeigen sich besonders im Gebrauch. Durch solche Vandalismus-Schutzschichten wird der Sitzkomfort erheblich beeinflußt, da durch diese Einlagen eine härtere und damit unbequemere Sitzfläche entsteht.

Besonders problematisch ist jedoch das im Gebrauch immer wieder vorkommende Herauslösen einzelner, abgerissener Drähte. Diese durchstechen dann den eigentlichen Sitzbezug und stehen aus der Sitzfläche, oft nicht ausreichend wahrnehmbar, heraus. Dadurch können sich Benutzer von öffentlichen Verkehrsmitteln verletzen. Aus diesem Grund besteht bei den Betreibern öffentlicher Verkehrsmittel ein großes Interesse an einer Ablösung dieser Antivandalismus-Schutzschichten durch geeignetere Materialien.

Deshalb wurden auch Vandalismus-Schutzschichten aus schnittfesten Textilfasern beschrieben. So wird in Au-A 86 - 52 272 vorgeschlagen, die Vandalismus-Schutzschicht aus einem Gewebe oder einem Nadelfilz aus aromatischen Polyamidfasern - Aramidfasern - zu bilden und diese Schicht mit dem Oberstoff zu verkleben. Einen Nadelfilz aus Aramidfasern als Vandalismus-Schutzschicht erwähnt auch EP-A 355 879.

Weder Gewebe noch Nadelfilze aus aromatischen Polyamidfasern ergeben jedoch bei Schneid- und Einstichversuchen die geforderte Schnitt- und Stichfestigkeit, so daß diese Problemlösungen zwar die Nachteile der Vandalismus-Schutzschichten aus Metall nicht zeigen, aber bezüglich der Schnitt- und Stichfestigkeit die Forderungen an Vandalismus-Schutzschichten nicht ausreichend erfüllen.

Zwei Antivandalismuslagen, nämlich eine aus einem Metallgitter und eine zweite aus Aramidfasern, werden in FR-A 2 592 334 beschrieben. Hier werden zwar die obengenannten Nachteile etwas verringert, aber die Gefahr der Verletzung durch herausstehende Drähte und der Nachteil der schlechteren Verarbeitbarkeit von Vandalismus-Schutzschichten aus Metall bleiben bestehen. Dazu kommt, daß diese Problemlösung auch höhere Produktionskosten als bei der Verarbeitung einer einheitlichen Vandalismus-Schutzschicht verursacht

Eine Schutzschicht, die aus unterschiedlichen Flächengebilden und aus sehr verschiedenen Materialien wie Glasfasern, Polyesterfasern, keramischen Fasern, aromatischen Polyamidfasern oder Kohlenstoffasern bestehen kann, erwähnt EP-A 512 382. Diese Fasermaterialien können in Form von Gittern, Netzen, Geweben oder Gewirken vorliegen. Diese Patentanmeldung vermittelt aber keine Lehre, wie eine solche Schutzschicht beschaffen sein muß, um einen ausreichenden Widerstand gegen den Vandalismus leisten zu können.

Der Erfindung liegt die Aufgabe zugrunde, eine Schutzschicht, insbesondere eine Vandalismus-Schutzschicht zur Verfügung zu stellen, die eine befriedigende Verarbeitbarkeit, hohe Stich- und Schnittbeständigkeit sowie geringe Verletzungsgefahr aufweist und somit eine kostengünstige Herstellung und Verarbeitung ermöglicht. Weiter besteht die Aufgabe darin, eine Vandalismus-Schutzschicht zur Verfügung zu stellen, die eine Schwerentflammbarkeit oder Nichtbrennbarkeit aufweist, um auch den Forderungen der Betreiber öffentlicher Verkehrsmittel nach flammhemmenden Eigenschaften der Vandalismus-Schutzschicht gerecht werden zu können.

Ausgehend von dieser Aufgabenstellung wird eine Schutzschicht vorgeschlagen, die aus einer Maschenware aus schnittfesten Fasern, wie aromatischen Polyamidfasern, nach dem Gelspinnverfahren ersponnenen Polyethylenfasern oder Glasfasern, einem Draht in mindestens einem Fadensystem der Maschenware und einer wenigstens einseitig auf die Schutzschicht aufgebrachten textilen Vliesschicht besteht.

Gegenüber den bisher für die Herstellung von Vandalismus-Schutzschichten vorwiegend vorgeschlagenen Webwaren ergeben Maschenwaren, besonders auf Raschel- und Häkelgalonmaschinen hergestellte Maschenwaren, erhebliche Vorteile. Diese zeigen sich in der Schnittbeständigkeit und im Verarbeitungsverhalten.

Bei einem Schnittversuch mit einem Messer wirkt bei Webwaren das Schneidgerät bevorzugt senkrecht auf das Garn der Vandalismus-Schutzschicht ein. Dies ist bei Maschenwaren, bedingt durch deren Konstruktion, nicht der Fall. Die senkrechte Einwirkung wird sich beim Ansetzen des Schneidgeräts hier nur als seltenes Ereignis ergeben. Die der durch das Schneidgerät einwirkenden Kraft entgegengesetzt parallel wirkende Kraftkomponente der Garne ist bei Geweben somit deutlich kleiner als bei Maschenwaren, wodurch sich ein besonderer Vorteil von Maschenwaren gegenüber Geweben ergibt. Wie Schneidversuche gezeigt haben, kann mit Maschenwaren eine deutlich höhere Schnittbeständigkeit erzielt werden als mit Geweben oder mit den ebenfalls für Vandalismus-Schutzschichten vorgeschlagenen Nadelfilzen.

Weitere deutliche Vorteile zeigen sich in den Verarbeitungseigenschaften von Maschenwaren im Vergleich zu Geweben. So ist es bekannt, daß bei der Herstellung von Geweben aus Aramidfasern erhebliche Festigkeitsverluste in Kauf genommen werden müssen, die bei unsachgemäßer Verarbeitung bis zu 50 % der Ausgangsfestigkeit betragen können. Diese Verschlechterung der Festigkeit bei der Gewebeherstellung ist mit ziemlicher Wahrscheinlichkeit auf die besonders an den Kreuzungspunkten von Kett- und Schußfäden auftretenden Abquetsch- und Scherbelastungen der Garne zurückzuführen. Bedingt durch die Verarbeitungstechnik und die Konstruktion von Maschenwaren sind diese Belastungen hier wesentlich geringer. Die Ausgangsfestigkeit der Aramidfasern bleibt also bei der Herstellung von Maschenwaren wesentlich besser erhalten als bei der Gewebeherstellung.

Als weiterer Vorteil der Maschenware gegenüber Geweben oder Nadelfilzen ist deren Flexibilität bei der Verarbeitung zu nennen. Dieser Vorteil macht sich vor allem bei der Herstellung von Sitzbezügen mit den hier üblichen Wölbungen und Rundungen positiv bemerkbar.

Durch die Beschichtung mit einer textilen Vliesschicht läßt sich die Schutzschicht unmittelbar mit einer Deckschicht verbinden, so daß die Schutzschicht gegenüber der Deckschicht eine gewisse Beweglichkeit behält. Wird als Deckschicht ein Polsterstoff verwendet, so behält der mit der Schutzschicht versehene Polsterstoff im Grundsatz seinen textilen Charakter bei und läßt sich wie ein Polsterstoff verarbeiten, da durch die Schutzschicht keine Verminderung der Elastizität und Dehnfähigkeit eintritt.

Wenngleich Stichverletzungen des Polsters trotz der Schutzschicht immer noch möglich sind, wird ein Einschneiden und Lösen des Polsterstoffs von der gegenkaschierten Schutzschicht erheblich erschwert, so daß sich keine aufklaffenden Textilenden ergeben und auch kein Aufreißen von Hand möglich ist. Ein weiterer Vorteil besteht darin, daß sich Einstiche oder andere Oberflächenbeschädigungen mit handelsüblichen Textilklebstoffen reparieren und/oder versiegeln lassen.

Vorzugsweise kann die Vliesschicht mit der Maschenware vernadelt sein, um eine Klebverbindung zwischen der Schutzschicht und der Vliesschicht zu vermeiden.

Ein für die Verarbeitung vorbereiteter Polsterstoff bzw. ein Werkstoff für Fahrzeugdächer, Cabrioverdecke, Fahrzeugplanen, Zelte, Traglufteilen, Wandverkleidungen, Splitterschutzwände, schutzsichere Westen läßt sich durch eine mit der Vliesschicht verbundene, vorzugsweise verklebte Deckschicht aus einem Gewebe oder eine Folie herstellen, so daß sich dieses Material unmittelbar in üblicherweise Weise verarbeiten läßt.

Um die Antivandalismuswirkung bzw. die Wirkung als Splitterschutzwand oder schutzsichere Weste zu erhöhen, kann auch die Vliesschicht aus schnittfesten Fasern, wie aromatischen Polyamidfasern, nach dem Gelspinnverfahren ersponnenen Polyethylenfasern oder Glasfasern bestehen.

Als schnittfeste Textilfasern sind für die Herstellung von insbesondere Vandalismus-Schutzschichten aromatische Polyamidfasern besonders gut geeignet. Diese Fasern werden häufig auch als Aramidfasern bezeichnet. Ein weiterer wesentlicher Vorteil der Aramidfasern ist ihre geringe Brennbarkeit, so daß eine besondere Ausrüstung mit flammhemmenden Mitteln beim Einsatz dieser Faserart nicht erforderlich ist. Die Forderung nach geringer Brennbarkeit wird vor allem bei Fahrzeugsitzen für öffentliche Verkehrsmittel erhoben. Darüberhinaus besitzen aromatische Polyamidfasern auch sehr hohe Festigkeiten.

Außer aromatischen Polyamidfasern können Polyolefinfasern, besonders nach dem Gelspinnverfahren hergestellte Polyethylenfasern, für die Herstellung der Vandalismus-Schutzschicht Verwendung finden. Diese haben allerdings, im Gegensatz zu Aramidfasern, nicht den Vorteil der geringen Brennbarkeit und sind somit in Einsatzgebieten wie Fahrzeugsitzen für öffentliche Verkehrsmittel, in denen diese Eigenschaft gefordert wird, nicht verwendbar.

Auch Glasfasern, die ebenso wie aromatische Polyamidfasern bezüglich der Nichtbrennbarkeit gute Voraussetzungen bieten, können zur Herstellung der erfindungsgemäßen Vandalismus-Schutzschicht Einsatz finden.

Aromatische Polyamidfasern, nach dem Gelspinnverfahren ersponnene Polyethylenfasern oder Glasfasern können in der Vandalismus-Schutzschicht entweder allein, als Mischungen dieser Fasern oder als Mischungen mit anderen Fasern Einsatz finden. Bei der Auswahl der Mischungspartner und der Mischungsverhältnisse ist allerdings darauf zu achten, daß die Schnittschutzeigenschaften und die Schwerentflammbarkeit nicht negativ beeinflußt werden. Bevorzugt wird der alleinige Einsatz einer schnittbeständigen Faser als Textilkomponente in der Vandalismus-Schutzschicht. Besonders bevorzugt wird der alleinige Einsatz von aromatische Polyamidfasern als schneidbeständige Textilfasern in der Vandalismus-Schutzschicht.

Die Titer der Garne, die für die Herstellung der erfindungsgemäßen Vandalismus-Schutzschicht Einsatz finden sollen, liegen in Bereichen zwischen 420 und 8500 dtex. Bevorzugt wird ein Bereich zwischen 1000 und 5000 dtex, besonders bevorzugt ein Bereich zwischen 1500 und 3500 dtex. Bei der Auswahl des Garntiters muß ein Mittelweg zwischen angestrebter Schnittbeständigkeit und Gebrauchskomfort eingeschlagen werden. Höhere Titer ergeben eine bessere Schnittbeständigkeit als niedrigere, im Hinblick auf den Sitzkomfort sind aber niedrigere Titer den höheren vorzuziehen. Der Filamenttiter dieser Garne soll unter 5 dtex liegen, bevorzugt wird ein Titerbereich zwischen 0,5 und 3 dtex.

Die vorzugsweise beidseitig auf die Schutzschicht aufgebrachte Vliesschicht kann auf einer, vorzugsweise auf beiden Seiten mit einer dauerhaft fähigen Kleberschicht und einer abziehbaren Schutzfolie versehen sein, so daß sich die Schutzschicht getrennt von einer Deckschicht verarbeiten läßt. Dies ist insbesondere dann günstig, wenn die Schutzschicht mit der Deckschicht zu einer Polsterung für Fahrzeugsitze verarbeitet werden soll. In diesem Fall läßt sich ein Polsterbezug aus dieser Schutzschicht fertig vorarbeiten, nach Abziehen der Schutzfolie auf der einen Seite mit dem Schaumkörper des Sitzes verkleben und in einem letzten Arbeitsgang nach Entfernen der äußeren Schutzfolie mit dem vorgearbeiteten Polsterstoff verkleben.

Die Kleberschicht läßt sich auf die Fließschicht aufsprühen oder als doppelseitig klebende Folie aufbringen.

Eine weitere Verbesserung der Verarbeitungsfähigkeit der Schutzschicht unter einem Polsterstoff läßt sich erreichen, wenn der Draht mindestens in einem aus der Ebene der Maschenware herausragenden Fadensystem enthalten ist, so daß die Schutzschicht trotz des eingelagerten Drahts eine ausreichende Flexibilität gewährleistet, die im Hinblick auf eine gute Schnittbeständigkeit besonders wichtig ist.

Für die Herstellung der erfindungsgemäßen Vandalismus-Schutzschicht kommt eine Maschenware, bevorzugt eine Kettenwirkware, besonders bevorzugt eine auf Raschel- oder Häkelgalonmaschinen hergestellte Maschenware, zum Einsatz. Das Flächengewicht dieser Ware kann zwischen 100 und 2000 g/m² liegen. Unter 100 g/m² kann eine ausreichende Schnittfestigkeit nicht mehr erreicht werden. Bevorzugt wird ein Bereich zwischen 200 und 1000 g/m², besonders bevorzugt wird ein Bereich zwischen 200 und 600 g/m². Versuche haben gezeigt, daß besonders die für öffentliche Verkehrsmittel geforderte Schnittfestigkeit im allgemeinen in einem Bereich von 300 - 400 g/m² gut erzielt werden kann. Da aber die Schnittfestigkeit noch von einigen anderen Eigenschaften, wie beispielsweise vom Garntiter abhängig ist, kann sich der Bereich von 300 - 400 g/m², je nach Art der verwendeten Garne, nach oben oder nach unten verschieben. Höhere Bereiche von 500 - 700 g/m² und besonders von 700 - 1000 g/m² können die Schnittfestigkeit deutlich weiter verbessern, sie sind aber aus wirtschaftlichen Gründen nicht immer realisierbar.

Bezüglich der Maschendichte haben sich Werte zwischen 1/cm und 20/cm als günstig erwiesen. Bevorzugt wird ein Bereich von 2/cm bis 5/cm, in dem die gewünschte Schnittfestigkeit erzielt werden kann.

Um ein aus der Ebene der Maschenware herausragendes, einen Draht enthaltendes Fadensystem zu erhalten, werden beispielsweise zwischen die mittels Kurzschiene gelegten Maschenfäden, zum Beispiel aus Garnen aus aromatischen Polyamidfasern, mittels einer Langschiene Schußlegefäden aus aromatischen Polyamidfasern gelegt. Über diese werden mittels einer Figurschiene weitere Schußlegefäden, die einen ummaschten Draht enthalten, gelegt.

Diese drahthaltigen Fäden ragen aus der Ebene der Maschenware heraus.

Eine andere Möglichkeit ist, mit zwei Langschienen zu arbeiten und für die obere mittels Langschiene erzeugte Legung einen ummaschten Draht vorzusehen. Zusätzlich wird noch mittels Figurschiene ein weiterer ummaschter Draht über die Maschenfäden gelegt. Wesentlich ist hierbei, daß der Draht in den langen Fadenlegungen enthalten ist, da nur auf diese Weise eine gute Schnittfestigkeit erzielt werden kann.

Für welche Legesysteme ein ummaschter Draht eingesetzt wird, hängt vor allem vom vorgesehenen Einsatzgebiet und von den geforderten Schnittschutzeigenschaften ab.

Der in der Vandalismus-Schutzschicht mitverwendete Draht kann als massiver Draht, als Drahtgarn oder Drahtzwirn zum Einsatz kommen. Der Durchmesser dieses Drahtes soll zwischen 0,1 und 2,0 mm liegen, bevorzugt wird ein Bereich zwischen 0,2 und 0,6 mm.

Der Gewichtsanteil des Drahtes in der Maschenware hängt von einer Reihe von Faktoren ab. So kann ein relativ geringer Anteil zum Einsatz kommen, wenn zwei oder mehr Vandalismus-Schutzschichten übereinander Verwendung finden. Ein höherer Anteil wird dagegen benötigt, wenn beispielsweise die Maschenware nicht alleine aus schnittfesten Fasern hergestellt wird, sondern Mischungen von schnittfesten mit nicht schnittfesten Fasern eingesetzt werden. Deshalb kann der Gewichtsanteil des Drahtes in der erfindungsgemäßen Vandalismus-Schutzschicht in einem Bereich von 10 - 90 % liegen. Bevorzugt wird ein Bereich von 20 - 60 %.

Der Draht sollte eine Wellen- oder Spiralform aufweisen. Im Hinblick auf eine bessere Verarbeitbarkeit wird eine Wellenform bevorzugt. Durch diese Wellenform werden drei wesentliche Vorteile erreicht.

So ist die Schnittfestigkeit einer durch Mitverwendung eines wellenförmigen Drahtes hergestellten Vandalismus-Schutzschicht wesentlich besser als bei Verwendung eines glatten Drahtes. Die bessere Schnittfestigkeit der mit gewelltem Draht hergestellten Ware ist vor allem damit erklärbar, daß ein gewellter Draht in der Vandalismus-Schutzschicht insgesamt eine größere Fläche einnimmt als ein glatter Draht. Beim Einstechen eines Messers und vor allem bei dem Versuch, dieses durch die einzuschneidende Ware zu ziehen, ist bei einem gewellten Draht die Wahrscheinlichkeit, daß das Messer auf den Draht trifft und nicht mehr weitergezogen werden kann, wesentlich größer als bei einem glatten Draht. Der Vorteil des gewellten Drahtes macht sich in ganz besonderer Weise dann bemerkbar, wenn die Maschenware aus Mischungen von schnittfesten mit nicht schnittfesten Fasern hergestellt wird.

Ein anderer Vorteil ist die bei einem wellenförmigen Draht im Vergleich zu einem glatten Draht geringere Gefahr des Herausarbeitens aus dem Verbund der Vandalismus-Schutzschicht und der Verursachung von Verletzungen. Bedingt durch seine Form ist die Wahrscheinlichkeit, daß der Draht durch die mechanischen Beanspruchungen bei der Sitzbenutzung nach oben durch den Oberstoff geschoben wird und aus diesem herausragt, deutlich geringer als bei einem glatten, ungewellten Draht.

Als dritter Vorteil ist bei der Verwendung eines gewellten Drahtes eine größere Flexibilität der hergestellten Maschenware und damit eine bessere Verarbeitbarkeit zu nennen.

Bezüglich der Form und der Zahl der Wellen bestehen keine besonderen Beschränkungen. Ein Längenverhältnis von 1 : 1,5 - 1 : 3,5 hat sich als günstig erwiesen. Bei den hier angegebenen Längenverhältnissen ist 1 die Länge des Drahtes in gewelltem oder spiraligem Zustand und die andere Zahl die Länge des Drahtes nach dem Strecken und Herausziehen der Struktur.

Bevorzugt wird der in der erfindungsgemäßen Vandalismus-Schutzschicht einzusetzende Draht mit einem Mantel aus Textilfasern umhüllt. Hierfür bieten sich als Möglichkeiten das Umspinnen, das Umwickeln oder das Einzwirnen des Drahtes an.

Diese Methoden sind dem Fachmann bekannt. Besonders bevorzugt wird zur Herstellung der erfindungsgemäßen Vandalismus-Schutzschicht ein ummaschter Draht eingesetzt.

Zum Ummaschen wird der Draht in ein Maschengebilde eingelegt und durch zusätzliche Bildung weiterer Maschen umhüllt, so daß sich als Mantel des Drahtes eine Maschenware bildet. Durch dieses Ummaschen wird bei einem eventuellen Durchtrennen des Drahtes verhindert, daß sich der Draht durch die mechanische Beanspruchung der Vandalismus-Schutzschicht aus dieser herausarbeiten und Verletzungen verursachen kann.

Versuche haben gezeigt, daß durch die besondere Struktur der durch Ummaschen hergestellten Mantelschicht ein wesentlich höherer Schutz des Drahtes vor dem Herausstechen erreicht werden kann als bei anderen Methoden der Mantelbildung wie Umspinnen, Umwickeln oder Einzwirnen.

Zum Ummaschen des Drahtes können Garne beliebiger Fasermaterialien Einsatz finden. Im Interesse einer optimalen Schnittbeständigkeit der Vandalismus-Schutzschicht wird jedoch, die Verwendung einer schnittfesten Faser, wie einer aromatischen Polyamidfasern, einer nach dem Gelspinnverfahren hergestellten Polyethylenfaser oder einer Glasfaser bevorzugt. Besonders bevorzugt wird die Verwendung einer aromatischen Polyamidfaser.

Der für die Herstellung der erfindungsgemäßen Vandalismus-Schutzschicht einzusetzende Draht kann einen Mantel eines leicht schmelzbaren Polymeren enthalten. Hierfür sind alle Polymeren, die als Schmelzkleber Verwendung finden können, geeignet. Beispiele solcher Polymere sind Ethylen-Vinylacetat-Copolymere, Copolyamide, Copolyester, Polyisobutylen und Polyvinylbutyrale.

Ein mit Schmelzkleber ausgerüsteter Draht wird bevorzugt in das für die Verklebung besonders vorgesehene Legesystem bei der Maschenwarenherstellung eingebracht. Die erfindungsgemäße Vandalismus-Schutzschicht kann somit sowohl mit Schmelzkleber versehenen Draht als auch Draht, der selbst keinen Schmelzkleber-Mantel hat, enthalten.

Die erfindungsgemäße Vandalismus-Schutzschicht findet vor allem in Fahrzeugsitzen für öffentliche Verkehrsmittel Anwendung. Über dieser Schutzschicht wird ein Oberstoff angeordnet. Hierfür ist jede Art der bekannten Fahrzeugsitz-Bezugsstoffe geeignet. Bezüglich der Faserart und der Konstruktion des textilen Flächengebildes für den Oberstoff bestehen keine Einschränkungen. Der zu wählende Oberstoff sollte mit einer flammhemmenden Ausrüstung versehen oder aus einer Faser mit eingesponnenem flammhemmenden Mittel hergestellt worden sein.

Besonders geeignet ist als Oberstoff ein Florstoff. Wenn versucht wird, den Fahrzeugsitz aufzuschlitzen, so wird das Messer in der darunter liegenden Vandalismus-Schutzschicht gehemmt. Je nach Verbindung zwischen Oberstoff und Vandalismus-Schutzschicht kann also ein kurzer Riß in dem Oberstoff entstehen. Bei Verwendung eines Florgewebes oder einer Flormaschenware als Oberstoff ist es möglich, den Riß durch ein partielles Umlegen des Flors bei einer weiteren Benutzung des Sitzes abzudecken, der somit nicht leicht erkennbar ist. Bei einem Flachgewebe oder einer Flachmaschenware als Oberstoff wird dagegen der Riß stärker auffallen.

Besonders bei der Verwendung der erfindungsgemäßen Vandalismus-Schutzschicht in Fahrzeugsitzen kommt der Art der Verbindung eine wesentliche Bedeutung zu. Eine direkte ganzflächige Verklebung der Maschenware mit dem Oberstoff ist von Nachteil. Im Interesse einer guten Schnittschutzbeständigkeit ist es wichtig, der unter dem Oberstoff als Vandalismus-Schutzschicht angeordneten Maschenware eine gewisse Beweglichkeit zu ermöglichen, da auf diese Weise der Widerstand gegen das Einschneiden höher ist als bei einer starr bzw. ganzflächig mit dem Oberstoff verklebten Vandalismus-Schutzschicht. Mit dem erfindungsgemäßen Aufbau der Schutzschicht, die mit dem Oberstoff über eine mit der Maschenware vernadelte Vliesschicht verbunden ist, wird die erforderliche Beweglichkeit der Schutzschicht erreicht.

Bei aus der Ebene der Maschenware herausragender Fadenlage kann ggf. ohne großen zusätzlichen Aufwand, zum Beispiel durch Auftrag eines Klebers mit Hilfe einer Walze, eine zusätzliche linienförmige Verklebung mit dem Vlies erreicht werden, ohne die erforderliche Beweglichkeit zu vermindern. Die aus der Ebene der Maschenware herausragende Fadenlage enthält den Draht und die Verklebung erfolgt bevorzugt an dem drahthaltigen Fadensystem. An den drahthaltigen Stellen wird ein besserer Klebeeffekt erzielt als an den nicht drahthaltigen Stellen. Die linienförmige Verklebung bietet aber andererseits den Vorteil einer guten Trennfähigkeit, wenn beispielsweise eine Reparatur des Fahrzeugsitzes, zum Beispiel ein Austauschen des Oberstoffes, notwendig wird.

Unter der Vandalismus-Schutzschicht besteht der Fahrzeugsitz üblicherweise aus einem Polsterschaum. Der hierfür einzusetzende Schaum ist bevorzugt Polyurethanschaum. Um die Voraussetzungen für eine geringe Brennbarkeit, die im allgemeinen bei Fahrzeugsitzen für öffentliche Verkehrsmittel gefordert wird, zu erfüllen, ist es zweckmäßig, dem Schaumstoff flammhemmende Mittel zuzumischen.

In gleicher Weise wie für die Sitzfläche von Fahrzeugsitzen kann die erfindungsgemäße Vandalismus-Schutzschicht auch für die Lehnen von Fahrzeugsitzen in öffentlichen Verkehrsmitteln Verwendung finden.

Die Anwendung der erfindungsgemäßen Vandalismus-Schutzschicht soll aber nicht auf die Fahrzeugsitze für öffentliche Verkehrsmittel beschränkt bleiben. Hierfür sind zahlreiche weitere Einsatzgebiete möglich. Als Beispiele werden Fahrzeugplanen, Fahrzeugfaltschiebedächer und Cabrioverdecke, Wandauskleidungen wie zum Beispiel Prallwände, Zelte und Traglufthallen genannt. Diese Aufzählung soll als Beispiel und nicht einschränkend verstanden werden. Die erfindungsgemäße Vandalismus-Schutzschicht ist überall dort vorteilhaft einsetzbar, wo die Gefahr besteht, daß die aus Flächengebilden, meist textilen Flächengebilden oder Kunststoffen, hergestellte Deckschicht aus Vandalismus- oder Diebstahlabsichten aufgeschnitten wird.

Die Erfindung soll auch nicht auf die Verwendung einer einzigen Vandalismus-Schutzschicht in den genannten und weiteren ähnlichen Artikeln beschränkt bleiben. In gleicher Weise können auch zwei oder mehr Vandalismus-Schutzschichten Verwendung finden.

Die beschriebene Vandalismus-Schutzschicht kann als Schutzschicht auch in Artikeln, die nicht vandalismusgefährdet sind, zum Einsatz kommen. So läßt sich die erfindungsgemäße Vandalismus-Schutzschicht, die bevorzugt aus aromatischen Polyamidfasern hergestellt wird, besonders vorteilhaft in Splitterschutzwänden, zum Beispiel auf Flughäfen, einsetzen. Aufgrund der sehr guten antiballistischen Eigenschaften der aromatischen Polyamidfasern bildet die erfindungsgemäße Vandalismus-Schutzschicht einen guten Schutz gegen Splitter. Hier ist es zweckmäßig, mehrere Lagen der Vandalismus-Schutzschicht zu verwenden. Ebenso läßt sich die Schutzschicht in kugelsicheren Westen verwenden.

Mit der erfindungsgemäßen Vandalismus-Schutzschicht wird ein wirksamer Schutz gegen das Aufschneiden erzielt. Darüberhinaus bietet die erfindungsgemäße Vandalismus-Schutzschicht eine Reihe weiterer Vorteile wie geringe Verletzungsgefahr beim Brechen der Drahteinlagen und gute Abtrennbarkeit der Vandalismus-Schutzschicht von der Nachbarschicht für eventuelle Reparaturarbeiten bei dennoch guter Verbindung mit den angrenzenden Schichten. In öffentlichen Verkehrsmitteln ist weiterhin bei Einsatz von aromatischen Polyamidfasern oder Glasfasern die geringe Brennbarkeit der Vandalismus-Schutzschicht ein besonderer Vorteil.

## Patentansprüche

1. Schutzschicht, insbesondere Vandalismus-Schutzschicht für Fahrzeugsitze, Fahrzeugdächer, Cabrioverdecke, Fahrzeugplanen, Zelte, Traglufthallen, Wandverkleidungen, Splitterschutzwände, schußsichere Westen aus
- einer Maschenware aus schnittfesten Fasern wie aromatischen Polyamidfasern, nach dem Gelspinnverfahren ersponnenen Polyethylenfasern oder Glasfasern,
- einem Draht in mindestens einem Fadensystem der Maschenware und
- einer wenigstens einseitig auf die Schutzschicht aufgebrachten textilen Vliesschicht.

2. Schutzschicht nach Anspruch 1, **dadurch gekennzeichnet,** daß die Vliesschicht mit der Maschenware vernadelt ist.

3. Schutzschicht nach Anspruch 1 oder 2, **gekennzeichnet durch** eine Vliesschicht aus schnittfesten Fasern wie aromatischen Polyamidfasern, nach dem Gelspinnverfahren ersponnenen Polyethylenfasern oder Glasfasern.

4. Schutzschicht nach Anspruch 1, 2 oder 3, **gekennzeichnet durch** eine mit der Vliesschicht verbundene Deckschicht.

5. Schutzschicht nach Anspruch 4, **dadurch gekennzeichnet,** daß die Deckschicht mit der Vliesschicht verklebt ist.

6. Schutzschicht nach Anspruch 5, **dadurch gekennzeichnet,** daß die Vliesschicht mit einer dauerhaftfähigen Kleberschicht und einer abziehbaren Schutzfolie versehen ist.

7. Schutzschicht nach Anspruch 6, **gekennzeichnet durch** beidseitig auf die Schutzschicht aufgebrachte Vliesschichten und eine dauerhaftfähige Kleberschicht sowie eine abziehbare Schutzfolie auf jeder Vliesschicht.

8. Schutzschicht nach einem oder mehreren der Ansprüche 1 bis 7, **dadurch gekennzeichnet,** daß der Draht mindestens in einem aus der Ebene der Maschenware herausragenden Fadensystem enthalten ist.

9. Schutzschicht nach einem oder mehreren der Ansprüche 1 bis 8, **dadurch gekennzeichnet,** daß die Maschenware eine Kettenwirkware ist.

10. Schutzschicht nach einem oder mehreren der Ansprüche 1 bis 8, **dadurch gekennzeichnet,** daß die Maschenware eine Raschelware ist.

11. Schutzschicht nach einem oder mehreren der Ansprüche 1 bis 8, **dadurch gekennzeichnet,** daß die Maschenware eine Häkelgalonware ist.

12. Schutzschicht nach einen oder mehreren der Ansprüche 1 bis 11, **dadurch gekennzeichnet,** daß der in mindestens einem Fadensystem enthaltene Draht einen Durchmesser von 0,1 - 2,0 mm aufweist.

13. Schutzschicht nach einem oder mehreren der Ansprüche 1 bis 2, **dadurch gekennzeichnet,** daß der in mindestens einem Fadensystem enthaltene Draht einen Durchmesser von 0,2 - 0,6 mm aufweist.

14. Schutzschicht nach einem oder mehreren der Ansprüche 1 bis 13, **dadurch gekennzeichnet,** daß der Draht gewellt oder spiralförmig ist.

15. Schutzschicht nach einem oder mehreren der Ansprüche 1 bis 14, **dadurch gekennzeichnet,** daß der Draht mit einer Maschenware aus textilem Garn ummascht ist.

16. Schutzschicht nach einem oder mehreren der Ansprüche 1 bis 4, **dadurch gekennzeichnet,** daß der Draht mit einem leicht schmelzbaren Polymeren ummantelt ist.

17. Schutzschicht nach einem oder mehreren der Ansprüche 1 bis 4, **dadurch gekennzeichnet,** daß der Draht mit einem leicht schmelzbaren Polymeren ummantelt und mit einer Maschenware aus textilem Garn ummascht ist.
